# EUROPEAN PATENT APPLICATION

(11) **EP 3 214 742 A1**
(43) Date of publication of application: **06.09.2017**
(21) Application number: 15855912.0
(22) Date of filing: 27.10.2015
(51) Int. Cl.: H02K 41/02, H02K 41/03

(54) **LINEAR ACTUATOR**

(30) Priority: 29.10.2014 JP 2014220139
(71) Applicant: KYB Corporation, Tokyo 105-6111 (JP)
(72) Inventor: SATOU, Kousuke, Tokyo 105-6111 (JP)
(74) Representative: Grünecker Patent- und Rechtsanwälte PartG mbB
(86) International application number: PCT/JP2015/080284
(87) International publication number: WO 2016/068147

(57) **Abstract**

A linear actuator (100) includes, a first tube (10) provided with a plurality of coils (41) placed thereinside, the plurality of coils (41) being held by a tubular yoke (40); a rod (30) movable in an axial direction inside the yoke (40); a plurality of permanent magnets (31) held by the rod (30) while being lined up in the axial direction, the plurality of permanent magnets (31) opposing the plurality of coils (41); and wires (44) connected to the plurality of coils (41) and drawn to the outside of the linear actuator (100) via an opening (11A) provided in the first tube (10); and a guard member (60) provided in the first tube (10) so as to be interposed between the wires (44) and the rod (30).

## Description

### TECHNICAL FIELD

The present invention relates to a linear actuator that is extended and contracted in an axial direction by an electromagnetic force.

### BACKGROUND ART

JP 2012-157186A discloses a rod-type linear motor that includes a field system serving as a movable element and an armature serving as a stator. In this rod-type linear motor, the movable element can reciprocate with respect to the stator, and a cable connected to the armature is directed to the outside via an opening.

### SUMMARY OF INVENTION

With the rod-type linear motor described in JP 2012-157186A, if the cable becomes slack for some reason, the cable could possibly come into contact with the movable element. This gives rise to the risk that the movable element reciprocates with respect to the stator while in contact with the cable.

The present invention aims to provide a linear actuator in which wires from coils do not come into contact with a movable member, even if the wires become slack.

According to one aspect of the present invention, a linear actuator includes: a main body portion provided with a plurality of coils placed thereinside, the plurality of coils being held by a tubular yoke; a rod movable in an axial direction inside the yoke; a plurality of permanent magnets held by the rod while being lined up in the axial direction, the plurality of permanent magnets opposing the plurality of coils; wires connected to the plurality of coils and drawn to the outside of the linear actuator via an opening provided in the main body portion; and a guard member provided in the main body portion so as to be interposed between the wires and the rod.

### BRIEF DESCRIPTION OF DRAWINGS

FIG. 1A is a cross-sectional view of a linear actuator in a contracted state according to a first embodiment of the present invention, taken along an axial direction.
FIG. 1B is a cross-sectional view taken along the line A-A in FIG. 1A.
FIG. 2 is a cross-sectional view taken along the line B-B in FIG. 1A.
FIG. 3 is a cross-sectional view of a linear actuator in a contracted state according to a second embodiment of the present invention, taken along an axial direction.
FIG. 4 is a cross-sectional view taken along the line C-C in FIG. 3.
FIG. 5 is a cross-sectional view of a linear actuator in a contracted state according to a third embodiment of the present invention, taken along an axial direction.
FIG. 6 is a cross-sectional view of a linear actuator in a contracted state according to a fourth embodiment of the present invention, taken along an axial direction.
FIG. 7 is a cross-sectional view of a linear actuator in a contracted state according to a fifth embodiment of the present invention, taken along an axial direction.
FIG. 8 is a cross-sectional view of a linear actuator in a contracted state according to a sixth embodiment of the present invention, taken along an axial direction.

### DESCRIPTION OF EMBODIMENTS

Embodiments of the present invention will now be described with reference to the drawings.

### First Embodiment

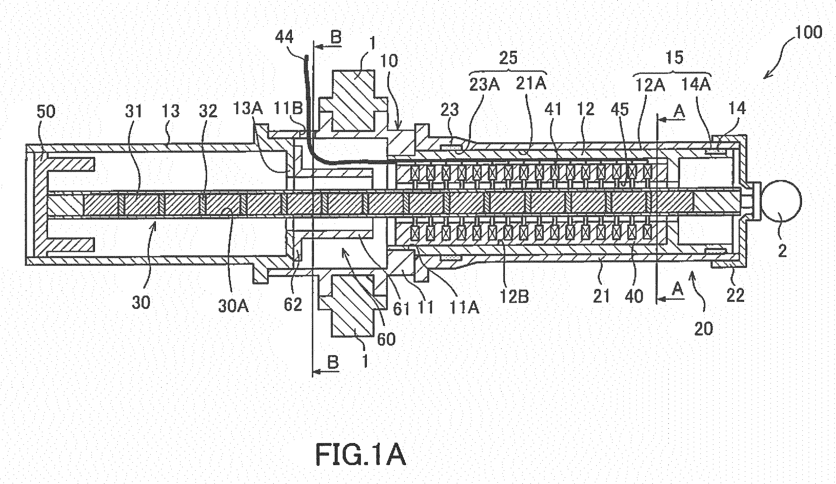

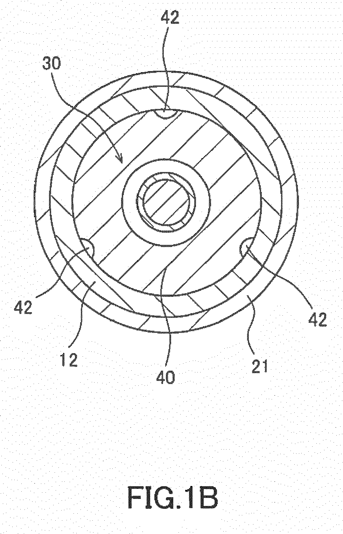

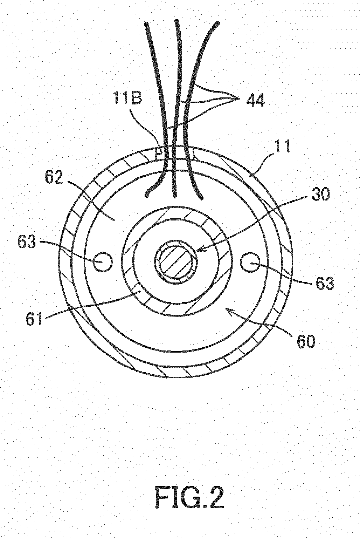

The following describes a linear actuator 100 according to a first embodiment of the present invention with reference to FIGs. 1A to 2. FIG. 1A is a cross-sectional view of the linear actuator 100 taken along a direction of an axis line. FIG. 1B is a cross-sectional view taken along the line A-A in FIG. 1A. FIG. 2 is a cross-sectional view taken along the line B-B in FIG. 1A.

The linear actuator 100 includes a first tube 10 serving as a main body portion, a second tube 20 that is slidably mounted on an outer circumference of the first tube 10, a rod 30 that is fixed to an end of the second tube 20 and holds permanent magnets 31, and a yoke 40 that is fit inside the first tube 10 and holds coils 41 opposing the permanent magnets 31.

In the linear actuator 100, a thrust (an electromagnetic force) that drives the rod 30 in an axial direction is generated in accordance with a current flowing through the coils 41, and the first tube 10 and the second tube 20 are relatively displaced on the basis of the thrust. This causes the linear actuator 100 to extend and contract between a fully contracted position shown in FIG. 1A and a fully extended position (not shown).

The first tube 10 includes a base portion 11 having a shape of a hollow cylinder, an inner tube 12 that is fixed to one end of the base portion 11, and a guide tube 13 that is fixed to the other end of the base portion 11.

The base portion 11 is a tubular member that is open at both ends. A pair of trunnion shafts 1 projecting in a radial direction is fixed to an outer circumference of the base portion 11. The pair of trunnion shafts 1 is rotatably supported by an external member (not shown). Accordingly, the linear actuator 100 is held in such a manner that it is rotatable with respect to the external member.

The second tube 20 includes an outer tube 21 that has a shape of a hollow cylinder and is open at both ends, and a cap 22 that is attached to one end of the outer tube 21. One end of the second tube 20 is closed by the cap 22. The other end of the second tube 20 is an open end into which the inner tube 12 of the first tube 10 is inserted. A joint member 2 that is joined with the external member (not shown) is fixed to an outer side surface of the cap 22.

The inner tube 12 is slidably inserted into the outer tube 21 while being mounted on the base portion 11. One end of the inner tube 12 is fixedly fit on an inner circumferential surface 11A of the base portion 11. That is to say, the inner tube 12 is supported by the base portion 11 at one end.

The linear actuator 100 includes a first linear guide portion 15 and a second linear guide portion 25 for supporting the first tube 10 and the second tube 20 in such a manner that the first tube 10 and the second tube 20 can be relatively displaced in the axial direction.

A ring-shaped first bearing 14 is mounted on an outer circumference of a free end of the inner tube 12. A bearing surface (an outer circumferential surface) 14A of the first bearing 14 is in sliding contact with an inner circumferential surface 21A of the outer tube 21. The first linear guide portion 15 is composed of an outer circumferential surface 12A of the inner tube 12 and the bearing surface 14A of the first bearing 14.

A ring-shaped second bearing 23 is mounted on an inner circumference of the open end side of the outer tube 21. A bearing surface (an inner circumferential surface) 23A of the second bearing 23 is in sliding contact with the outer circumferential surface 12A of the inner tube 12. The second linear guide portion 25 is composed of the inner circumferential surface 21A of the outer tube 21 and the bearing surface 23A of the second bearing 23.

During the extension and contraction of the linear actuator 100, in the first linear guide portion 15, the bearing surface 14A of the first bearing 14 is in sliding contact with the inner circumferential surface 21A of the outer tube 21. On the other hand, in the second linear guide portion 25, the bearing surface 23A of the second bearing 23 is in sliding contact with the outer circumferential surface 12A of the inner tube 12. Accordingly, the inner tube 12 and the outer tube 21 smoothly slide on each other. The outer circumferential surface 12A of the inner tube 12 and the inner circumferential surface 21A of the outer tube 21 oppose each other, with no gap therebetween, via the first bearing 14 and the second bearing 23.

The guide tube 13 is a tubular member that is open at both ends. A rod guide 50 that is fixed to an end of the rod 30 is slidably placed inside the guide tube 13.

The rod 30 is a pole-like member with a hollow portion 30A. One end of the rod 30 is fixed to the inner side of the cap 22 that constitutes an end of the second tube 20. Furthermore, the other end of the rod 30 is fixed to the aforementioned rod guide 50. As the rod guide 50 is mounted on the other end of the rod 30, the guide tube 13 and the rod 30 are reliably rendered coaxial. This prevents the end of the rod 30 from swinging in the radial direction during the extension and contraction of the linear actuator 100.

The plurality of permanent magnets 31 are held in the hollow portion 30A of the rod 30 while being lined up in the axial direction. Each permanent magnet 31 has a columnar shape, and is magnetized in such a manner that its N pole and S pole are positioned in the axial direction. Neighboring permanent magnets 31 are placed in such a manner that their ends of the same polarity oppose each other. Furthermore, a yoke 32 is provided between neighboring permanent magnets 31. Note that the yokes 32 need not necessarily be provided, and neighboring permanent magnets 31 may be in contact with each other.

The yoke 40 having a shape of a hollow cylinder is mounted on an inner circumferential surface 12B of the inner tube 12. The yoke 40 has an insertion hole 45 through which the rod 30 is inserted in the axial direction. The plurality of coils 41 are embedded in the yoke 40. Note that the yoke 40 is made by integrally stacking ring-shaped members in the axial direction, with each coil 41 wound inside a space defined by contacting surfaces of neighboring ring-shaped members. The plurality of coils 41 are lined up in the axial direction so as to oppose the permanent magnets 31.

An outer circumference of the yoke 40 has a plurality of grooves 42 each running in a direction of an axis line. Wires 44 from the plurality of coils 41 are inserted into the grooves 42. Note that the grooves 42 are not limited to being provided at three positions, however, the grooves 42 may be provided at four positions, or any number of grooves 42 may be provided. Instead of being provided on an outer circumferential surface of the yoke 40, the grooves 42 may be provided on the inner circumferential surface 12B of the inner tube 12. The grooves 42 may be provided on both of the outer circumferential surface of the yoke 40 and the inner circumferential surface 12B of the inner tube 12.

The wires 44 from the plurality of coils 41 are drawn to the outside via the grooves 42 and an opening 11B that is provided in the base portion 11. Once the wires 44 have been drawn to the outside, they are connected to a controller (not shown). The controller controls the thrust generated by the linear actuator 100 and the directions of the generated thrust (the extension and contraction directions) by controlling the intensity and phase of the current supplied to the coils 41.

An end of the guide tube 13 on the base portion 11 side has an annular projected portion 13A that projects inward. A guard member 60 is attached to the projected portion 13A by screws 63. The guard member 60 includes a guard 61 having a shape of a hollow cylinder, and a flange-like attachment 62. In a region between the yoke 40 and the opening 11B, the guard 61 is interposed between the wires 44 and the rod 30. The attachment 62 is attached to the projected portion 13A. As the guard 61 having a shape of a hollow cylinder is interposed between the wires 44 and the rod 30, the wires 44 can be prevented from coming into contact with the rod 30, even if the wires 44 become slack. Note that the guard 61 of the guard member 60 is not limited to having a shape of a hollow cylinder; it may be a polygonal tube. Furthermore, the guard member 60 is not limited to being attached to the projected portion 13A by the screws 63; it may be attached to the projected portion 13A by adhesion, welding, or other means.

A description is now given of the operation of the linear actuator 100.

In the linear actuator 100, when the coils 41 are supplied with a current of a predetermined direction, a thrust that drives the rod 30 in one direction (a rightward direction in FIG. 1A) is generated. Along with the driving of the rod 30 in one direction, the linear actuator 100 extends as the outer tube 21 of the second tube 20 moves while sliding with respect to the inner tube 12 of the first tube 10.

When the linear actuator 100 has extended to the fully extended position, the rod guide 50 is in contact with a side surface of the projected portion 13A, thereby restricting a further movement of the rod 30. As such, the projected portion 13A functions as a stopper.

On the other hand, when the coils 41 are supplied with a current with a phase opposite to a phase of the current supplied during the extension, a thrust that drives the rod 30 in the other direction (a leftward direction in FIG. 1A) is generated. Along with the driving of the rod 30 in the other direction, the linear actuator 100 contracts as the outer tube 21 of the second tube 20 moves while sliding with respect to the inner tube 12 of the first tube 10.

When the linear actuator 100 has contracted to the fully contracted position, an open end of the outer tube 21 is in contact with an end of the base portion 11, thereby restricting a further movement of the rod 30. As such, the open end of the outer tube 21 functions as a stopper.

In the present embodiment, the guard member 60 is attached to a surface of the projected portion 13A on the base portion 11 side. Alternatively, the attachment 62 may be attached to a surface of the projected portion 13A on which the rod guide 50 slides. In this case, the guard 61 is interposed between the wires 44 and the rod 30 in the state where the guard 61 penetrates an opening between the projected portion 13A and the rod 30. Furthermore, as the attachment 62 comes into contact with the rod guide 50, it functions as a stopper that restricts a movement of the rod 30 in the extension direction.

The foregoing first embodiment achieves the following effect.

The first tube 10 is provided with the guard member 60 that is interposed between the wires 44, which are connected to the plurality of coils 41, and the rod 30. In this way, the wires 44 can be prevented from coming into contact with the rod 30, even if the wires 44 become slack.

### Second Embodiment

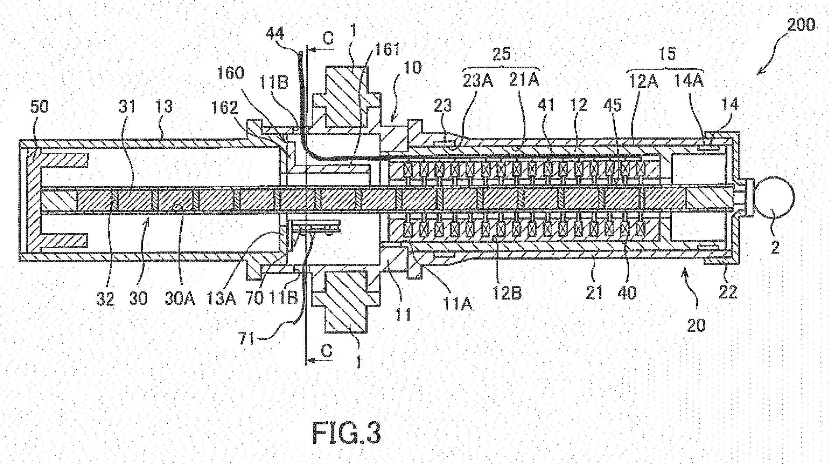

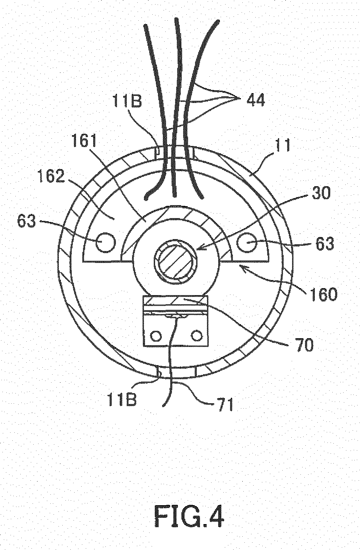

The following describes a linear actuator 200 according to a second embodiment of the present invention with reference to FIGs. 3 and 4. FIG. 3 is a cross-sectional view of the linear actuator 200 taken along a direction of an axis line. FIG. 4 is a cross-sectional view taken along the line C-C in FIG. 3. In the following description of the embodiment, differences from the above first embodiment will be focused. Furthermore, components that are the same as those of the linear actuator 100 according to the first embodiment will be given the same reference signs thereas, and the explanation thereof will be omitted.

The second embodiment differs from the first embodiment in that a stroke sensor 70 is provided, and that a guard member 160 has a shape of a hollow semicylinder so as to allow the stroke sensor 70 to oppose a rod 30.

The stroke sensor 70 is attached to a projected portion 13A so as to oppose a part of a side surface of the rod 30 inside a base portion 11. The stroke sensor 70 incorporates a Hall sensor that generates a Hall voltage in accordance with the strength of a magnetic field. The stroke sensor 70 detects relative positions of coils 41 and permanent magnets 31 on the basis of the Hall voltage generated by the Hall sensor. Wires 71 from the stroke sensor 70 are drawn to the outside via openings 11B provided in the base portion 11.

Signals detected by the stroke sensor 70 are input to an external controller via the wires 71. The controller calculates the strokes of the second tube 20 with respect to the first tube 10 on the basis of information detected by the stroke sensor 70, that is to say, the relative positions of the coils 41 and the permanent magnets 31. The controller controls the intensity and phase of a current flowing through the coils 41 while feeding back the strokes of the second tube 20 with respect to the first tube 10. In this way, the linear actuator 200 can be controlled more accurately.

The guard member 160 includes a guard 161 having a shape of a hollow semicylinder, and a flange-like attachment 162. In the region between the yoke 40 and the openings 11B, the guard 161 is interposed between wires 44 and the rod 30, and covers a part of the rod 30 in a circumferential direction. The attachment 162 is attached to the projected portion 13A. As the guard 161 covers a part of the rod 30 in the circumferential direction, the stroke sensor 70 can be placed so as to oppose the rod 30.

Note that the guard 161 is not limited to having a shape of a hollow semicylinder. The guard 161 may have a shape of an arc of any angle, as long as it is interposed between the wires 44 and the rod 30 in the region between the yoke 40 and the openings 11B, and can prevent contact between the wires 44 and the rod 30. The guard 161 may have a polygonal shape, or may be formed by cutting out a part of a hollow cylinder member so as to allow the stroke sensor 70 to oppose the rod 30. Furthermore, the stroke sensor 70 may be replaced with a sensor for detecting an operational state of the linear actuator 200, such as a temperature sensor.

The foregoing second embodiment achieves the following effect.

The guard member 160 covers a part of the rod 30 in the circumferential direction, thereby allowing for the placement of the stroke sensor 70 for detecting the strokes of the second tube 20 with respect to the first tube 10. Therefore, the operation of the linear actuator 200 can be controlled accurately while preventing contact between the wires 44 and the rod 30.

### Third Embodiment

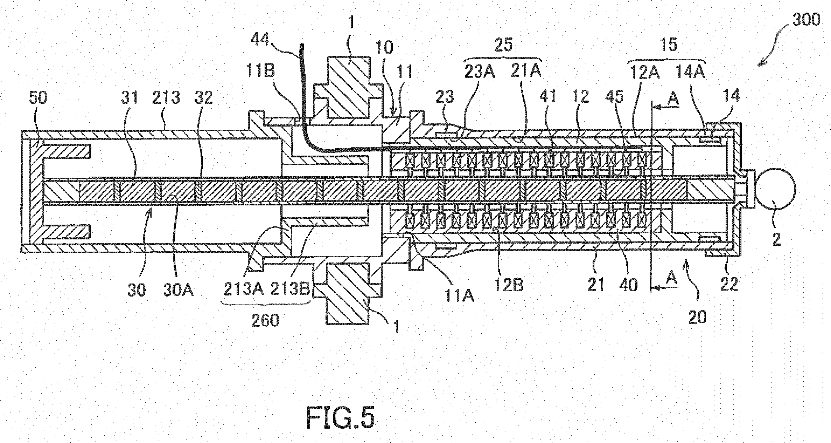

The following describes a linear actuator 300 according to a third embodiment of the present invention with reference to FIG. 5. FIG. 5 is a cross-sectional view of the linear actuator 300 taken along the direction of an axis line.

The third embodiment differs from the first embodiment in that a guard member 260 is formed integrally with a projected portion 213A that functions as a stopper.

The guard member 260 includes the annular projected portion 213A that projects inward, and guard 213B that has a shape of a hollow cylinder, stretching in an axial direction from the projected portion 213A, which covers an outer circumference of rod 30. The projected portion 213A and the guard 213B are formed integrally with a guide tube 213 in such a manner that they are located at an end of the guide tube 213 on the base portion 11 side. In the region between the yoke 40 and the opening 11B, the guard 213B is interposed between wires 44 and rod 30.

When the linear actuator 300 has extended to a fully extended position, the rod guide 50 is in contact with a side surface of the projected portion 213A, thereby restricting a further movement of the rod 30. As such, the projected portion 213A functions as a stopper.

In the present embodiment, the projected portion 213A and the guard 213B are formed integrally with the guide tube 213. Alternatively, the projected portion 213A and the guard 213B may be formed as a single integrated member, and this single integrated member may be attached to the guide tube 213.

The foregoing third embodiment achieves the following effects in addition to the effect achieved by the first embodiment.

The projected portion 213A stretches in a radial direction, and defines the fully extended position when the rod guide 50 is in contact with the projected portion 213A. The guard 213B stretches in an axial direction and covers the outer circumference of the rod 30. As the projected portion 213A and the guard 213B are integrally formed, there is no need to provide the guard member 260 with, for example, an attachment flange, and thus a weight reduction can be achieved. Furthermore, as the projected portion 213A and the guard 213B are formed integrally with the guide tube 213, attachment of the guard member 260 is not necessarily, and the number of assembly processes can be reduced.

### Fourth Embodiment

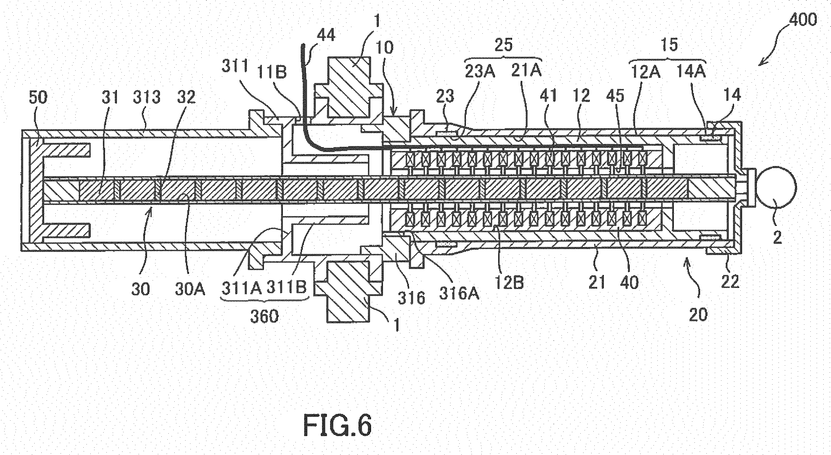

The following describes a linear actuator 400 according to a fourth embodiment of the present invention with reference to FIG. 6. FIG. 6 is a cross-sectional view of the linear actuator 400 taken along a direction of an axis line.

The fourth embodiment differs from the first embodiment in that a guard member 360 is attached to a base portion 311.

An adapter 316 is provided between the base portion 311 and an inner tube 12. One end of the inner tube 12 is fixedly fit on an inner circumferential surface 316A of the adapter 316. The adapter 316 is fixedly fit on an inner circumferential surface of the base portion 311.

The guard member 360 includes an annular projected portion 311A that projects inward, and a guard 311B that has a shape of a hollow cylinder, stretches in an axial direction from the projected portion 311A and covers an outer circumference of a rod 30. The projected portion 311A and the guard 311B are formed integrally with the base portion 311. In a region between a yoke 40 and an opening 11B, the guard 311B is interposed between wires 44 and the rod 30.

When the linear actuator 400 has extended to a fully extended position, a rod guide 50 is in contact with a side surface of the projected portion 311A, thereby restricting a further movement of the rod 30. As such, the projected portion 311A functions as a stopper.

In the present embodiment, the projected portion 311A and the guard 311B are formed integrally with the base portion 311. Alternatively, the projected portion 311A and the guard 311B may be formed as a single integrated member, and this single integrated member may be attached to the base portion 311.

The foregoing fourth embodiment achieves the following effects in addition to the effect achieved by the first embodiment.

The projected portion 311A stretches in a radial direction, and defines the fully extended position when the rod guide 50 is in contact with the projected portion 311A. The guard 311B stretches in the axial direction and covers the outer circumference of the rod 30. As the projected portion 311A and the guard 311B are integrally formed, there is no need to provide the guard member 360 with, for example, an attachment flange, and therefore a weight reduction can be achieved. Furthermore, as the projected portion 311A and the guard 311B are formed integrally with the base portion 311, attachment of the guard member 360 is not necessary, and the number of assembly processes can be reduced.

### Fifth Embodiment

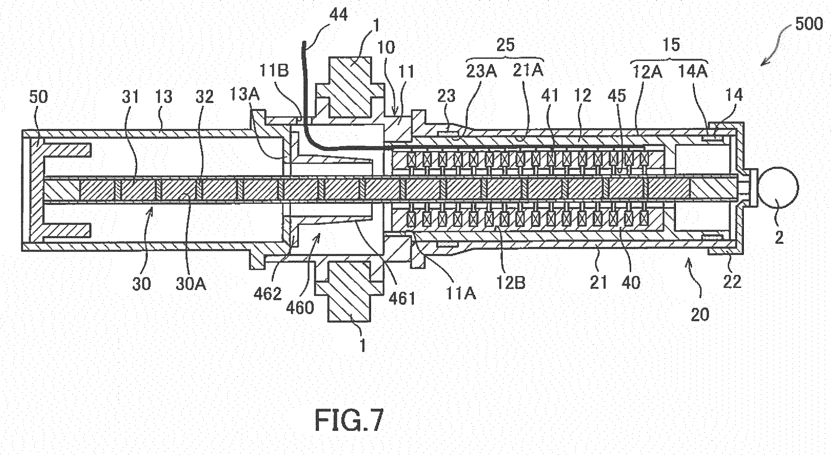

The following describes a linear actuator 500 according to a fifth embodiment of the present invention with reference to FIG. 7. FIG. 7 is a cross-sectional view of the linear actuator 500 taken along a direction of an axis line.

The fifth embodiment differs from the first embodiment in that an outer circumferential surface of a guard 461 of a guard member 460 is inclined so as to approach a rod 30 with decreasing distance to a tip of the guard member 460.

The guard member 460 includes a flange-like attachment 462 that is attached to a projected portion 13A, and the guard 461 that has a shape of a hollow cylinder, stretches in an axial direction from the attachment 462 and covers an outer circumference of the rod 30. The outer circumferential surface of the guard 461 is inclined so as to approach the rod 30 with decreasing distance from the attachment 462 side to the tip of the guard member 460. Note that the outer circumferential surface of the guard 461 need not be inclined in its entirety, and only a part of the outer circumferential surface of the guard 461 on the tip side may be inclined.

The foregoing fifth embodiment achieves the following effects in addition to the effect achieved by the first embodiment.

As the outer circumferential surface of the guard 461 of the guard member 460 is inclined so as to approach the rod 30 with decreasing distance to the tip of the guard member 460, the guard 461 is more reliably inserted between wires 44 and the rod 30 during the assembly of the first tube 10. The inclined outer circumferential surface of the guard 461 guides the wires 44, thereby facilitating the assembly of the first tube 10.

### Sixth Embodiment

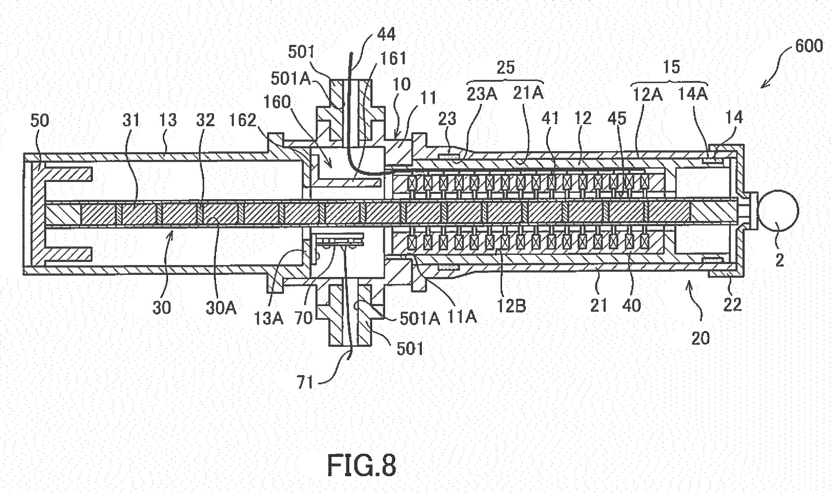

The following describes a linear actuator 600 according to a sixth embodiment of the present invention with reference to FIG. 8. FIG. 8 is a cross-sectional view of the linear actuator 600 taken along a direction of an axis line. In the following description of the sixth embodiment, differences from the above second embodiment will be focused. Furthermore, components that are the same as components of the linear actuator 200 according to the second embodiment will be given the same reference signs thereas, and the explanation thereof will be omitted.

The sixth embodiment differs from the second embodiment in that openings 11B provided in a base portion 11 are replaced with through holes 501A provided in a pair of trunnion shafts 501, and that the wires 44 from a plurality of coils 41 and the wires 71 from a stroke sensor 70 are drawn to the outside via the through holes 501A provided in the trunnion shafts 501.

In the linear actuator 600, the wires 44 from the plurality of coils 41 are drawn via the through hole 501A provided in one of the pair of trunnion shafts 501, whereas the wires 71 from the stroke sensor 70 are drawn via the through hole 501A provided in the other of the pair of trunnion shafts 501.

Note that when the stroke sensor 70 is not provided, only one of the pair of trunnion shafts 501 may have a through hole 1A.

The foregoing sixth embodiment achieves the following effects in addition to the effect achieved by the second embodiment.

As the trunnion shafts 501 have the through holes 501A via which the wires 44 and the wires 71 are drawn to the outside, the base portion 11 can be reduced in length compared to the case in which the base portion 11 has openings 11A. Accordingly, the total length of the linear actuator 600 can be reduced.

Furthermore, the wires 44 from the plurality of coils 41 are drawn via the through hole 501A provided in one of the trunnion shafts 501, whereas the wires 71 from the stroke sensor 70 are drawn via the through hole 501A provided in the other trunnion shaft 501. In this way, signals detected by the stroke sensor 70 are not influenced by a large current flowing through the wires 44 from the coils 41. Therefore, the signals detected by the stroke sensor 70 are accurately input to a controller without being influenced by a disturbance. Consequently, the operation of the linear actuator 600 can be controlled more accurately.

Embodiments of this invention were described above, but the above embodiments are merely examples of applications of this invention, and the technical scope of this invention is not limited to the specific constitutions of the above embodiments.

Each of the guard members 60, 160, 260, 360, 460 may be made of a non-magnetic element and may be in contact with the yoke 40. In this way, the wires 44 can be reliably prevented from coming into contact with the rod 30, even if the wires 44 become slack. Furthermore, as each of the guard members is made of a non-magnetic element, a magnetic path formed in the yoke 40 is not influenced.

This application claims priority based on Japanese Patent Application No.2014-220139 filed with the Japan Patent Office on October 29, 2014, the entire contents of which are incorporated into this specification.

## Claims

1. A linear actuator, comprising:
a main body portion provided with a plurality of coils placed thereinside, the plurality of coils being held by a tubular yoke;
a rod movable in an axial direction inside the yoke;
a plurality of permanent magnets held by the rod while being lined up in the axial direction, the plurality of permanent magnets opposing the plurality of coils;
wires connected to the plurality of coils and drawn to the outside of the linear actuator via an opening provided in the main body portion; and
a guard member provided in the main body portion so as to be interposed between the wires and the rod.

2. The linear actuator according to claim 1,
wherein
the main body portion includes:
a tubular base portion;
an inner tube fixed to one end of the base portion and
accommodating the plurality of coils; and
a guide tube fixed to the other end of the base portion allowing a rod
guide mounted on an end of the rod to slide thereinside, and
the guard member is mounted on the base portion or the guide tube.

3. The linear actuator according to claim 2,
wherein
the guard member includes a stopper and a guard,
the stopper stretches in a radial direction, and defines a fully extended position when the rod guide is in contact with the stopper, and
the guard stretches in the axial direction from the stopper, and covers an outer circumference of the rod.

4. The linear actuator according to claim 1,
wherein
the guard member covers a part of the rod in a circumferential direction.

5. The linear actuator according to claim 1,
wherein
an outer circumferential surface of the guard member between the wires and the rod is inclined so as to approach the rod with decreasing distance to a tip of the guard member.

6. The linear actuator according to claim 1,
wherein
the guard member is made of a non-magnetic element and is in contact with the yoke.
